## Europäisches Patentamt

## European Patent Office

## Office européen des brevets

(19)

(11) Publication number: **0 047 543**
**B1**

(12) **EUROPEAN PATENT SPECIFICATION**

(45) Date of publication of patent specification: **23.05.84**

(51) Int. Cl.³: **G 03 B 17/32,** G 03 B 27/58,
B 65 H 1/04

(21) Application number: **81200877.9**

(22) Date of filing: **04.08.81**

(54) A container suitable for holding a stack of photographic sheets.

(30) Priority: **08.09.80 GB 8028898**

(43) Date of publication of application:
**17.03.82 Bulletin 82/11**

(45) Publication of the grant of the patent:
**23.05.84 Bulletin 84/21**

(84) Designated Contracting States:
**BE DE FR GB**

(56) References cited:
**DE-A-2 416 208**
**DE-C- 469 103**
**FR-A-1 254 027**
**GB-A-1 515 852**
**US-A-3 359 877**
**US-A-3 491 671**
**US-A-3 852 780**

(73) Proprietor: **AGFA-GEVAERT naamloze**
**vennootschap**
**Septestraat 27**
**B-2510 Mortsel (BE)**

(72) Inventor: **Deconinck, Hugo Frans**
**August Petenlei 61**
**B-2100 Deurne-Zuid (BE)**

Courier Press, Leamington Spa, England.

## Description

This invention relates to a container suitable for holding a stack of photographic sheets.

In certain photographic work there is a need for a container wherein light-sensitive sheets can be held in such manner that the sheets can be exposed one by one to a light image, e.g. in a camera, while in the container, and such that each sheet after its exposure can be fed from the container into a processing apparatus by an automatic feed mechanism.

There are known containers wherein a stack of sheets is biased by spring means towards an exposure opening of the container, the foremost sheet being withheld by retaining means that prevent the stack from falling out of the container. Such containers are for instance known from GB—A—1,515,852 and DE—C—469,103. Removal of an exposed sheet from these containers occurs by the removal of the back of the container, or by the lateral withdrawal of the front sheet through an appropriate slot in a side wall of the container.

The present invention aims to provide a container that permits the exposed front sheet to be removed at the frontside of a container of the type referred to. The unloading of the cassette may in this way be performed by a compact automatic unloader.

According to the present invention, a container suitable for holding a stack of photographic sheets, said container comprising four side walls, a rear-wall, spring means for biasing a stack of sheets away from that rear wall, and retaining means which project inwardly over only the margin of the space bounded by said side walls, for retaining the stack against the action of said spring means, so that when a stack of sheets is in position in the container the front sheet, contacting such retaining means, can be exposed to a light image, is characterized in that along two opposed side walls of the container there are mutually opposed regions which are without retaining means so that by exerting buckling forces on a said front sheet in its own plane a portion of that sheet in register with those regions can be caused to bulge from the front of the container preparatory to removal of the sheet there from, and that there are provided sheet-buckle locking means which are formed by portions of said sheet retaining means that are arranged in such a way that at two opposite positions that are situated between said opposed regions and a common side-wall of the container, the distance between said sheet locking means and the rear-wall of the container is smaller than the distance between the retaining means and said rear wall at all other positions, by a value at least equal to the thickness of one sheet.

A container incorporating the invention can be of very simple construction and it can be made very cheaply. The invention includes containers as defined which are marketed in filled condition and are intentionally of disposable type, i.e. intended to be disposed of when emptied, and also includes containers which are designed to facilitate their re-loading and reuse.

While a container according to the invention can be used for holding photographic sheets of various kinds, the invention has been made primarily to provide a container for handling flexible light-sensitive sheets, particularly of light-sensitive silver halide type.

The invention includes a container as hereinbefore defined loaded with light-sensitive sheets. The expression "photographic sheet pack" where used hereafter in this specification denotes such a loaded container.

A container according to the invention can be used in combination with a holder incorporating a closure member which when closed light-tightly encloses the container in the holder. Alternatively the container itself may have a closure member which when closed light-tightly encloses the contents of the container.

Any closure member as above referred to is preferably in the form of a slide which can be slid open after fitting the container or holder as the case may be, to the back of a camera.

A photographic sheet pack according to the invention can be used in the making of a plurality of photographic prints by means of a silver halide diffusion transfer process. Diffusion transfer images are formed, as is well known, by image-wise transfer of image-forming substances from an image-wise exposed light-sensitive silver halide layer or layers to a receiving layer or layers where the transferred substances are converted to a visible image. In this manner negative and positive images can be formed in the light-sensitive layer(s) and the receiving layer(s) respectively.

For use in diffusion transfer photography, film sets are known which comprise photo-sensitive and image-receiving elements and an envelope containing processing liquid which becomes released for its processing function when pressure is exerted which ruptures the said envelope. Such film sets are widely used in so-called instant photography.

Such film sets are very well suited for use in the amateur photographic field. Film packs are available which contain a plurality of the described film sets but in practice pack sizes are limited to about twelve film sets because of the rather complicated assemblage involved. If more than one film pack has to be used in making a required number of prints of a given subject, unacceptable differences between prints may be found which are attributable to variations in photographic material quality from one pack to another.

The present invention, according to a second aspect thereof, provides a novel method of forming multiple diffusion transfer images, which can be used with advantage in professional and industrial photography. The new method uses as cassette a container as defined in claim 1 and is characterised in that a plurality of light-sensitive sheets held as a stack in a common cassette are one by one exposed to a light image by means of a camera and dispensed directly from the cassette to a processing machine.

Any number of light-sensitive sheet can conveniently be held as a stack in the cassette. For example the latter may contain more than twenty such sheets and even as many as one hundred such sheets.

The cassette used in a method according to the invention as above defined is a container according to the invention in its first aspect as hereinbefore defined. The light-sensitive sheets are preferably dispensed from the cassette to the processing machine by a mechanism operating on a buckling-feed principle. Such mechanism may operate as known per se, or it may operate as hereinafter described. Said mechanism can incorporate the invention described and claimed in the European patent applications nos. 81200875.3 and 81200876.1, filed on even date herewith, entitled "Dispenser for dispensing photographic sheets from a stack", and referring to the United Kingdom convention application No. 80 28897 filed September 8, 1980.

A method according to the invention can be carried out in the following manner. A sheet pack comprising a number of photosensitive elements, is fitted in an appropriate way to the back of a camera and a first exposure is made. The sheet pack is removed from the camera, and introduced into a daylight unloader and processor. Both steps are carried out light-tightly.

The unloader operates to separate the exposed sheet from the sheet pack by the buckling of the upper sheet under the influence of compression forces in the sheet. To that end, the unloader may comprise friction members for biasing the upper sheet in its own plane in one direction, whereby the sheet will buckle in a direction normal to said biasing direction. The buckling of the sheet occurs at the regions which are without the sheet retaining means.

The processor makes the exposed photosensitive sheet contact first the processing liquid, and next an image-receiving sheet that may either manually or automatically be supplied.

The sheet retaining means of the container may be arranged in such a way that at two opposed positions, each located between one of the said regions which are without retaining means and a common side-wall of the container, the distance between said sheet retaining means and the rear-wall of the container is smaller than such distance at all other positions by a value at least equal to the thickness of one sheet, thereby to constitute sheet buckle locking means. The advantage of this feature is that a sheet, once it has been withdrawn from below such sheet buckle locking means, by the buckling of a portion of the sheet in the zone of the interruptions in the retaining means, cannot slide back into the sheet pack by the elasticity of the sheet, since the trailing edge of the slid-away portion of the sheet abuts against such sheet-locking means.

Said sheet-buckle locking means may moreover operate to release a portion of the buckled sheet from the biasing force of the spring means of the sheet pack, since the next sheet is at least partially prevented from transmitting the biasing force to the first sheet by said locking means as will be explained further in the description of the invention.

The surface of the container member that is in contact with the rear-side of the last sheet of the stack of sheets may have a friction coefficient with respect to said sheet that is greater than the mutual friction coefficient between the sheets. Thereby it is prevented that withdrawal of the last but one sheet entails also the withdrawal of the last sheet. The latter situation notably occurs in case the last sheet is contacted by a smooth-surfaced biasing plate consisting of plastic, metal, or the like. Suitable measures for increasing the coefficient of friction of the surface of the container member that is in contact with the rear-side of the last sheet comprise the provision of friction strips of rubber or the like, the roughening of said member, etc.

The invention will be hereinafter described by way of example with reference to the accompanying drawings wherein:

Figure 1 is a cross-sectional representation of one embodiment of a sheet pack according to the present invention, fitted into a pack holder that is attached to a camera,

Figure 2 is a plan view of the sheet pack according to Figure 1, and

Figure 3 is a cross-sectional view on line III—III' of Figure 2,

Figure 4 is an enlarged view of the lower part of Figure 3, and

Figure 5 is a detail view of a corner portion of the container, viewed from the innerside of the container,

Figure 6 illustrates the sheet biasing means of the sheet pack,

Figures 7A to 7E illustrate the withdrawal of a sheet from the pack,

Figure 8 is a plan view of another embodiment of a sheet pack according to the invention, and

Figure 9 is a section on line IX—IX' of Figure 8,

Figure 10 is a cross-sectional representation of a further embodiment of a sheet pack according to the invention, fitted to a co-operating pack holder that is shown attached to a camera, and

Figures 11A to 11E illustrate the withdrawal of a sheet from a sheet pack according to Figure 10.

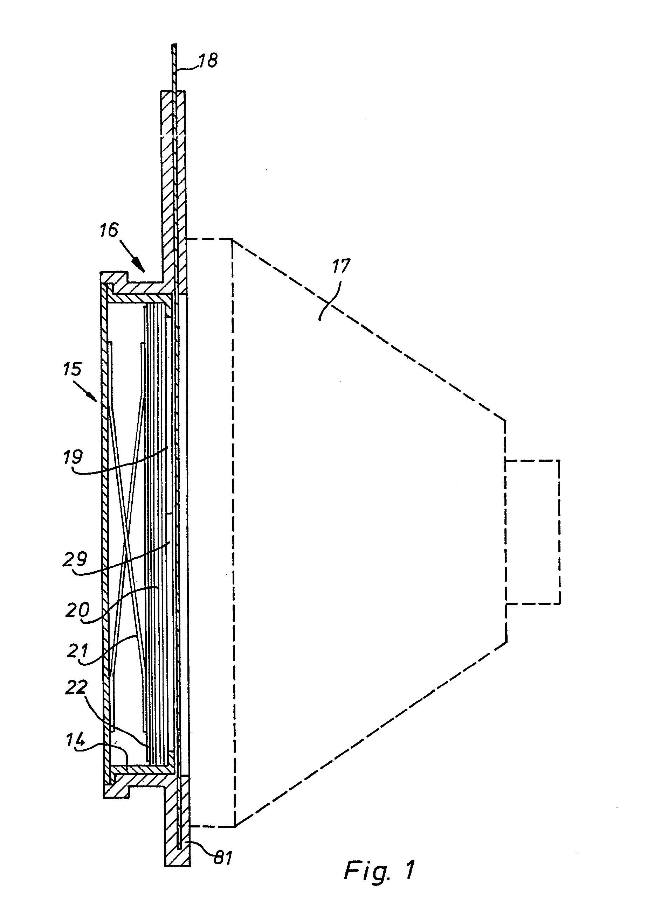

Referring to Figure 1, a photographic sheet pack 15 comprising a container 14 and an enclosed sheet stack 20 is fitted into a pack holder 16 that is attached to the rear of a camera 17 illustrated in broken lines. The camera may be a professional or semi-professional type camera for making passport photographs, studio exposures for the production of lay-outs, etc. The camera may be designed to accept a novel type of pack holder, but preferably the pack holder is designed in such a way that it ensures the fitting of the new sheet pack according to the invention, to the rear of an old camera. In the mentioned way, the new sheet pack may simply be substituted for known film packs of another type, for instance of the type as described in the introduction of the specification.

The pack holder 16 is provided with a dark slide 18, that is withdrawn from the exposure aperture when an exposure is made, and is closed to permit the removal of the pack holder with the sheet pack from the camera in daylight conditions, after the exposure step.

The sheet pack 15 fits light-tightly in the pack holder 16 and is secured thereto by means, not shown. The loading of the sheet pack into the pack holder may occur in the darkroom.

The sheet pack has an exposure aperture identified generally with the numeral 19 through which the image-wise exposure of the uppermost sheet of the stack 20 of light-sensitive sheets may occur in the camera. The sheets are biased in the direction of the exposure aperture by spring means 21 that engage a pressure plate 22.

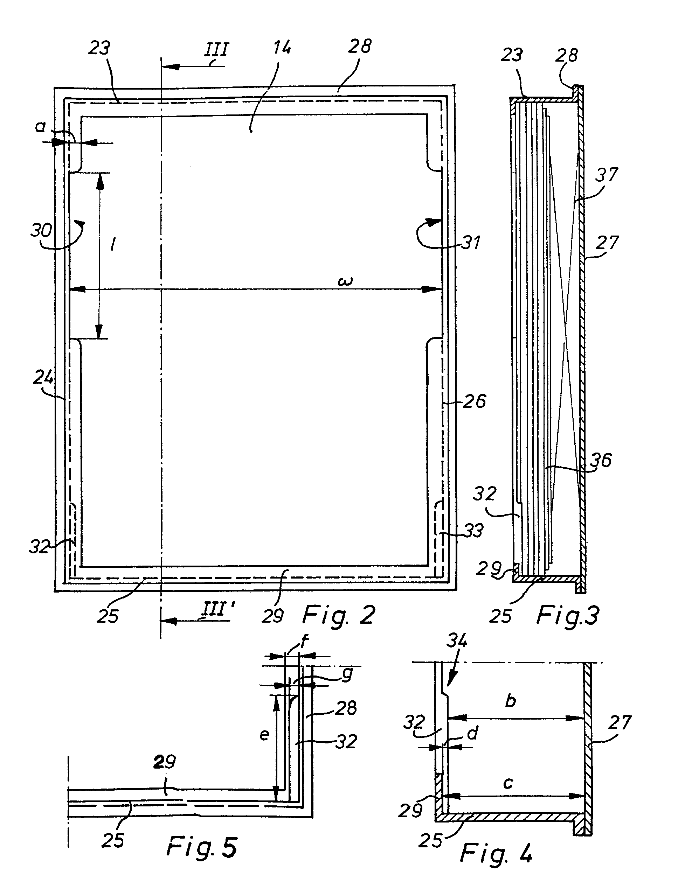

The sheet pack 15 is described in detail hereinafter with reference to Figures 2, 3 and 4, the sheets and the biasing means being omitted in Figures 2 and 4 for clearness' sake. It should be understood that the sheets fit into the container 14 with a clearance of some tenths of a millimeter between the sheet edges and the interior faces of the corresponding side-walls of the container.

The container 14 has side-walls 23, 24, 25 and 26, and a rear-wall 27. The rear-wall is fitted to an outwardly extending peripheral border 28 of the side-walls of the container. Said rear-wall may be removably fitted to the container to permit the re-loading of the container. However, according to a preferred embodiment of the invention the sheet pack container is a disposable container, and in such case the rear-wall may be permanently fixed to the container by glueing, welding, or the like.

The open front of the container is provided with sheet retaining means that extends along the side-walls and that is formed by inwardly extending wall portions that are situated in a plane parallel with the rear-wall of the container. In the present embodiment, said means is formed by an inwardly extending peripheral flange 29 with a width $a$ ranging approximately between 2 and 5 mm. The flange is interrupted at two opposite positions 30 and 31 over a length $l$ that suffices to permit what for the time being is the upper sheet of the stack to be buckled sufficiently to permit its removal from the container as will further be explained hereinafter. The interruptions determine a width $w$ that is equal to the interior distance between the corresponding side-walls 24 and 26. The location of the interruptions 30 and 31 may be as illustrated in Figure 2, but said interruptions may be also situated nearer to one side-wall of the container, as will be described later.

At the inner face the flange 29 is provided near the corners between the side-walls 24, 25 and 25, 26, with sheet-buckle locking members 32 and 33. These locking members are formed by portions of the sheet retaining means that are arranged so that the distance $b$ (see Figure 4) between said sheet locking means and the rear-wall of the container is smaller than the distance $c$ at the other positions of the sheet retaining means by a value $d$ at least equal to the thickness of one sheet. In the present case, the distance $c$ is the distance between the flange 29 and the rear wall 27 of the container, and the distance $d$ represents the thickness of the locking members which can be considered as a ridgelike elevation at two positions on the innerside face of the border.

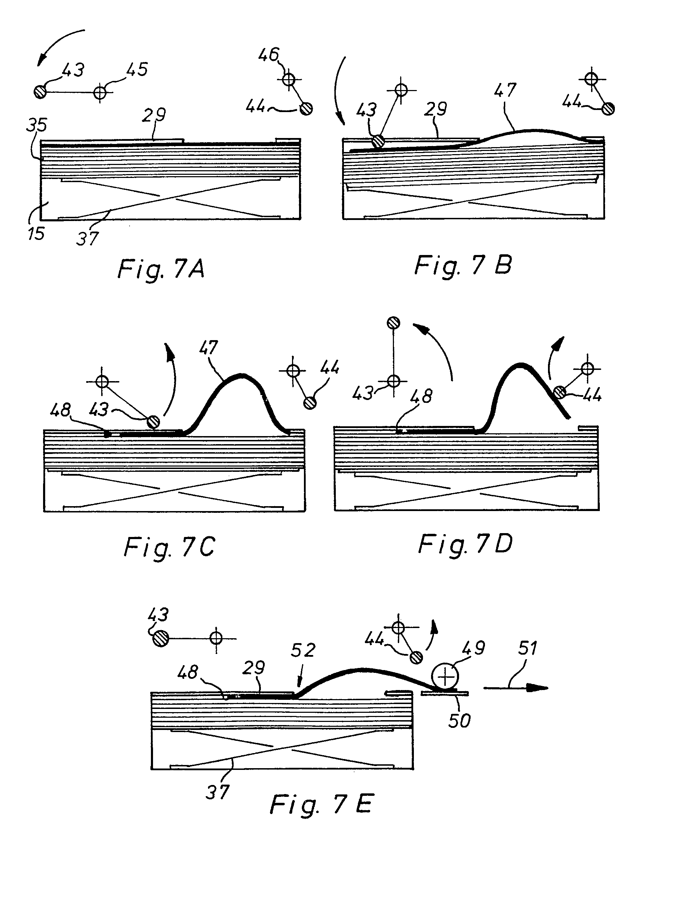

As to the other dimensions of the locking members the following considerations may apply. The length $e$ (see Figure 5) is determined by the distance over which the upper sheet is slid away in forming the buckle, as will further be explained with reference to Figures 7A to 7E. In fact it is only the free end of a sheet-buckle locking member, as indicated by the arrow 34 in Figure 4, which serves to lock the buckled sheet. In other words it is only the end face of that locking member which engages the trailing edge of the buckled sheet. It is therefore not essential for the locking members to extend back to the common side-wall 25. However it is desirable not to make the locking members so small that excessive localised pressure is exerted on the sheets that are biased against such members.

In the case of light-sensitive sheets that are rather pressure-sensitive, it may therefore be necessary to make the locking member extend as far as the common side-wall of the pack.

Whereas the thickness $d$ of the locking members may be smaller than the thickness of one sheet to fulfil the function of sheet-buckle arresting means, said thickness should preferably be at least equal to the thickness of one sheet in order to fulfil a second function, namely the elimination, or at least the considerable reduction, of the biasing force on the trailing portion of the upper sheet once the buckle in the sheet has been produced.

It will be understood that, when the upper sheet has been pulled beyond the locking members 32, 33, the biasing force on the other sheets is for a considerable part concentrated on the locking members. The upper sheet is no longer pinched between the lower half, according to Figures 2 and 3, of the sheet retaining flange 29 and the next sheet, so that its subsequent removal is facilitated.

Finally, the width $g$ of the sheet-buckle locking members 32 and 33 may be smaller than the width $f$ of the flange 29, as indicated in Figure 5, whereby an occasional curvature of the sheet corners as a consequence of the increased bias by the numbers 32 and 33 is displaced over some millimeters away from the border of the exposure opening of the container, so that the exposed sheet portion will always be perfectly flat.

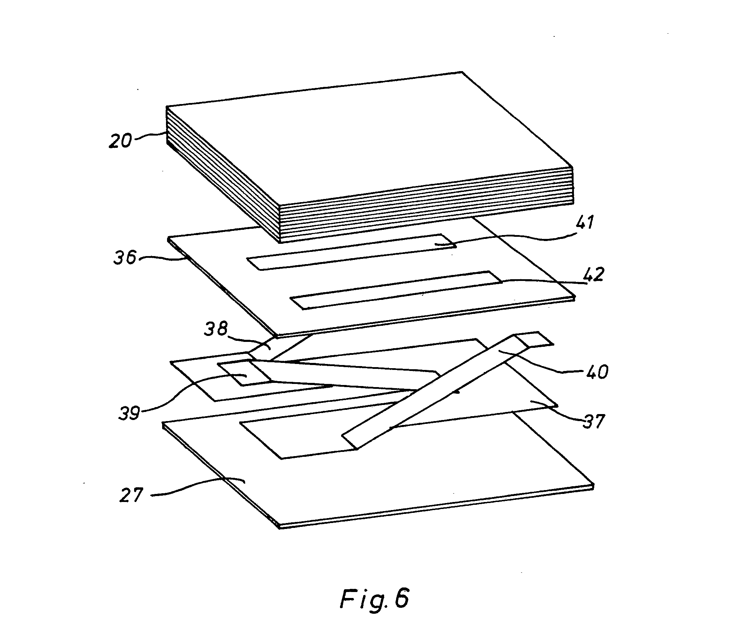

The biasing means of the container is illustrated in detail in the exploded view of Figure 6. The stack of sheets 20 rests on a pressure plate 36 of a size corresponding approximately with the size of a sheet. The pressure plate 36 is biased by spring means in the form of a plate 37 of spring steel or the like that has cut and shaped fingers 38, 39 and 40 that are capable of producing a substantially constant bias on the stack, irrespective of the number of sheets which it contains and even in fact if only one sheet is left in the container.

The plate 37 may rest unattached to the rear-wall 27 of the container.

The pressure plate 36 may be provided with friction strips such as 41 and 42 that ensure that the coefficient of friction between the upperside of the plate and the rear-side of the last sheet of the stack, is at least equal to and preferably larger than the coefficient of friction between the mutual sheets.

The removal of the upper sheet from the sheet pack will now be described with reference to Figures 7A to 7E which illustrate the successive positions of two cooperating friction members of an unloader that engage the upper sheet. As mentioned already in the introduction of the specification, the operation of the friction members is based on the coefficient of friction of the members versus the upper face of the sheets, that is greater than the mutual friction coefficient between the sheets. The friction members 43 and 44 may be rubberlike rods arranged to swing about pivots such as 45 and 46, but any other arrangement that is suited for performing the functions that will now be described, may be used. The friction members 43 and 44 may suitably have a length that is approximately equal to half the sheet width.

Referring to Figures 7A and 7B, the friction member 43 is rotated in the direction of the corresponding arrow so that the upper sheet of the stack of sheets is engaged, slightly pressed downwardly against the bias of the spring means, and finally urged to the right hand side according to the figures.

The compressive force on the sheet in its own plane causes the sheet to buckle at the place where it is free to do so, i.e. at the opposed interruptions in the flange 29. A sheet buckle 47 that has a form as illustrated in Figure 7C is produced as the contact between the friction member 43 and the sheet is broken. The following may then occur. If the buckling resistance of the sheet is relatively small, the unbuckled left-hand sheet portion may remain in the position as illustrated in Figure 7C. If, on the contrary, the buckling resistance is relatively high, and the thickness of a buckle locking member, illustrated in the present figures in the form of a pin 48, is equal to or greater than the thickness of one sheet, the sheet will tend to resume its flat shape until the trailing sheet edge abuts against the said pin 48.

The next step in the withdrawal of the sheet is performed by the friction member 44 that is now rotated as illustrated in Figure 7D in order to engage the sheet and withdraw its leading end from beneath the overlying portion of the flange 29.

When the friction member 44 reaches a near horizontal position, the sheet becomes free to flatten under the elastic recovery forces in the sheet (see Figure 7E), whereby the right-hand sheet end portion is caused to project beyond the boundary of the sheet pack. Said projecting sheet-portion may be engaged by a roller 49 co-operating with a backing plate 50 with a small friction coefficient in order to remove the sheet from the pack in the direction of the arrow 51. An alternative sheet transport mechanism may comprise two co-operating pressure rollers. The friction member 44 after reaching its horizontal position above referred to is rotated back to its original position as indicated in Figure 7E.

The removal of a sheet by the roller 49 is facilitated by the fact that the trailing portion of the next sheet is separated from the flange 29 of the container by a distance equal to or larger than the thickness of the sheet being removed. As described already, said separation is caused by the sheet-buckle locking member 48. Consequently the unbuckled portion of the sheet is practically no longer subjected to the biasing force of the spring means 37, and the removal of the upper sheet may occur almost without frictional restraint and without risk of entrainment of the next sheet.

It will be understood that a thickness $d$ of the sheet-buckle locking member 48, see the member 32 in Figure 4, that is exactly equal to the sheet thickness still causes a slight pinching of the buckled upper sheet, since the stack of sheets will take a very slightly sloping position because at the right-hand side, according to the Figures 7D and 7E, the stack is not held downwardly by en element like pin 48. Thus there may occur some pressure at the margins of the upper sheet at the position of the flange 29 indicated by the arrow 52 in Figure 7E and in case such pressure is detrimental to the proper sheet withdrawal, a thickness $d$ of the sheet-buckle locking members slightly larger than the thickness of one sheet may be appropriate.

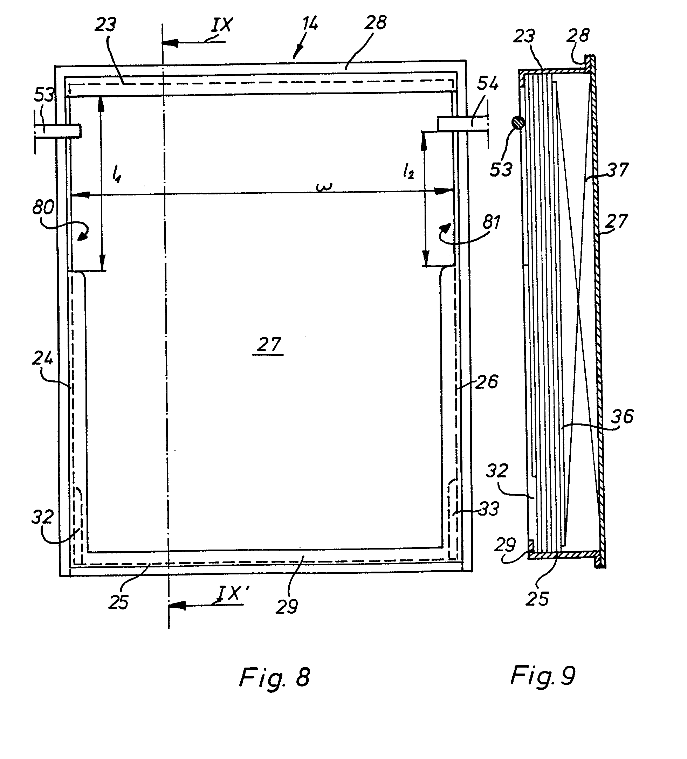

Another embodiment of a sheet pack according to the invention is illustrated in Figures 8 and 9. Said embodiment differs from the embodiment shown in Figures 2 and 3 only by the location of the flangeless regions 80 and 81 which now extend as far as the portion of the flange 29 on the common side-wall 23. The withdrawal of the upper sheet from the pack occurs as described with reference to Figures 7A to 7E.

As shown in Figures 8 and 9 sheet retaining members separate from the pack, such as the pins 53 and 54, may be provided. Said pins may form part of a pack holder, such as the one described with reference to Figure 1, and they may be fitted on the side-walls of such holder in such a way that they take a position with respect to a sheet pack as illustrated in Figures 8 and 9, once such sheet pack has been properly fitted into the pack holder.

The advantage of said separate sheet retaining means is as follows. It may happen that difficulties are met with the flatness of the stacked sheets, and with the flatness of the upper sheet in particular, at the position of the interruptions. Such a lack of flatness finds its origin in the elasticity of the stack of sheets, whereby the thickness of the stack may be slightly larger at the regions where there is no retaining flange 29 and hence less pressure force on the stack exists.

It has been found that in certain cases, e.g. when the container is a moulded construction, some difficulties may arise because of insufficient rigidity of the sheet retaining means, such as the peripheral flange 29, and in such case it may be desirable to make the flangeless regions somewhat longer than actually necessary and to receive the biasing force of the sheets at least partly on addition, more rigid, sheet retaining means situated within such flangeless regions. In the illustrated example, the actual buckling length in operation is $l_2$, as compared with the length $l_1$ of the flangeless regions of the pack.

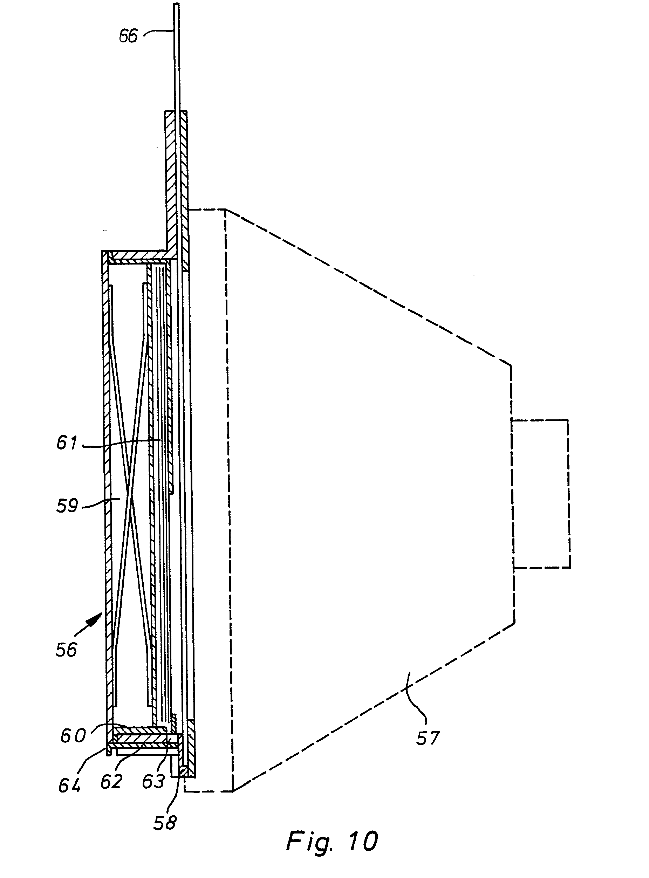

A still further embodiment of a sheet pack according to the invention is illustrated in Figures 10 and 11A to 11E.

Referring to Figure 10, the sheet pack 56 that is fitted to a camera 57 by means of a pack holder 58 comprises a generally rectangular container 59, the upper side-wall 60 of which is provided with a slot 62 through which the sheets 61 may be withdrawn one at a time subsequent to exposure. The pack holder 58 comprises a corresponding slot 63 that may be light-tightly closed by means of a dark slide 64 that is diagrammatically illustrated only. Locking means, not illustrated, may be provided for preventing the dark slide 64 from accidental opening while the sheet pack is on the camera. The locking means and the dark slide may be arranged in such a way that opening of the slide 64 is possible only in an automatic unloader for withdrawal of the exposed sheet. The pack holder 58 has a dark slide 66, the operation of which is similar to the operation of the slide 18 of the pack holder 15 shown in Figure 1.

The withdrawal of the upper sheet from the pack is described hereinafter by way of example with reference to Figures 11A to 11E.

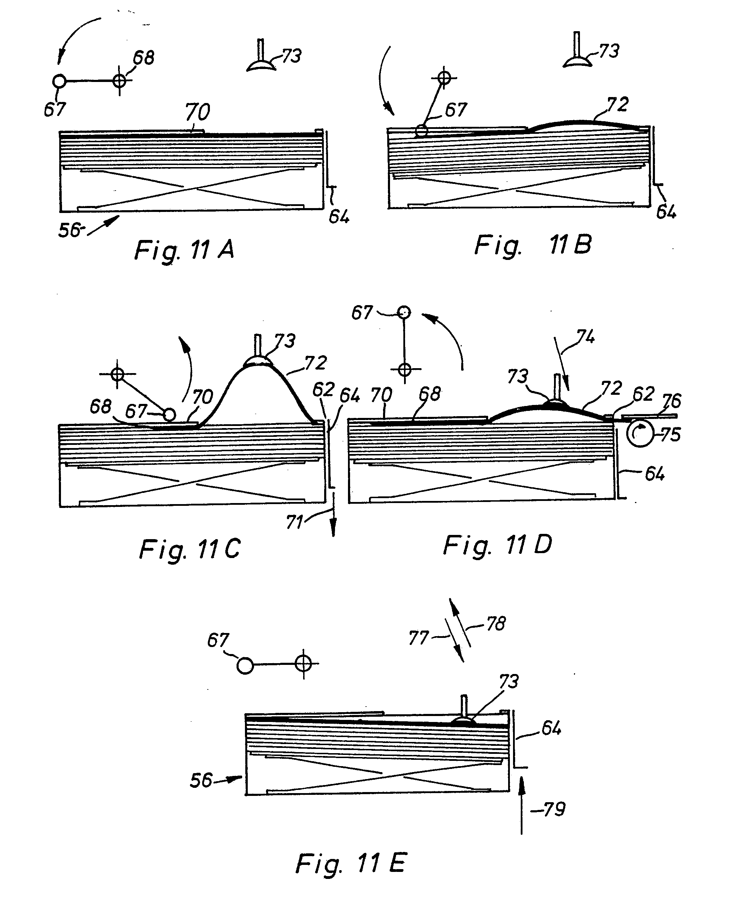

A friction member 67 that is rotatable about a point 68, is turned in the direction of the arrow to engage the upper sheet, as illustrated in Figures 11A to 11B. As the contact between the friction member and the sheet is broken, the displaced sheet portion takes a position as illustrated in Figure 11C. The trailing sheet portion may remain clamped between the sheet retaining border 70 and the next sheet, and keep thereby the position as shown, or it may slide slightly backwardly by the sheet elasticity to abut with the trailing sheet edge against the sheet-buckle locking means 68.

The removal of the sheet continues as follows.

The dark slide 64 is pulled downwardly by means, not illustrated, in the direction of the arrow 71 in Figure 11C, so that the discharge slot of the cassette holder 58 and the slot 62 of the sheet pack are set free. The sheet buckle 72 remains unchanged because the leading end of the sheet remains firmly biased against the portion of the border 70 at the exit slot 62.

A sheet flattening member 73, that may have the form of an inverted gutter extending transversely of the sheet, and that may be made of a resilient material such as rubber, or the like, is actuated to push the buckle 72 downwardly in the direction of the arrow 74, see Figure 11D. The flattening of the sheet buckle causes first the trailing sheet edge to firmly bear against the locking means 68. Then the forward sheet end is caused to advance through the slot 62 and to leave the sheet pack. The protruding sheet end may be a gripped by suitable sheet withdrawing means such as a driven roller 75 cooperating with a wall 76 with low friction coefficient, and transported for instance towards a device for the wet processing of the sheet and the application of an image-receiving sheet.

When the sheet has been completely removed and the slide 64 has been closed in the direction of the arrow 79, the sheet flattening member 73 is lowered according to the arrow 77 as far as beyond the plane of the exposure aperture of the container, as illustrated in Figure 11E, whereby the next sheet or sheets, is or are flattened in case it or they should have followed to a lesser or greater extent the buckling of the withdrawn upper sheet.

Finally, the member 73 is removed from the stack in the direction of the arrow 78 to a position as illustrated in Figures 11A and 11B, whereas the friction member 67 is swung to its starting position wherein its supporting arm takes an almost horizontal position. It is recalled that flattening member 73 is no suction member but, on the contrary, a flexible member that is capable to follow to a large extent the changing curvature of the sheet portion which is contacted thereby.

Although the container of a sheet pack according to the invention may be made from metal or the like, a preferred material for the container is plastic, and in consequence injection moulding as well as vacuum moulding of the pack may be considered.

The sheet pack may be light-tightly and airtightly sealed by means of a known foil lamina comprising layers of polyethylene and aluminium, that is sealed over the exposure opening of the pack.

The sheet pack may contain types of material other than described hereinbefore, for instance silver halide film or paper sheets that are capable of producing a direct positive image in liquid processing.

The unloading of a sheet pack may also occur by means of a roller co-operating with the pack holder rather than with a separate wall 50 and 76 as illustrated in Figures 7E and 11D. Thus an unloading apparatus may be arranged in such a way that it comprises an unloading roller that co-operates with the face 81 of the cassette holder 16 in Figure 1, to engage and remove the leading end of the sheet that has moved onto such face by the straightening of the sheet buckle. Preferably, such face of the sheet pack has a reduced coefficient of friction. This may suitably be obtained by providing such face with a self-adhesive strip of Teflon tape or the like, or by treating such face with a Teflon spray.

The interruptions of the sheet retaining flanges may take different positions as illustrated already in Figures 2 and 8. While theoretically any position enables the formation of a buckle in the upper sheet, a position of the interruptions symmetrically with respect to the length of the corresponding side walls may give less satisfactory results because the length of sheets that remains engaged after the sheet buckle has been released is rather limited so that the risk increases for the withdrawn sheet to take a skewed position. Therefore, a preferred location of the interruptions is within one half of the length of the corresponding sidewalls of the container. The container of the sheet pack may be provided with notches, recesses, or the like, that may co-operate with suitable arrangements on the pack holder, thereby to ensure that the sheet pack is fitted in the holder with the interruptions situated at the correct side of the pack holder. The sheet pack may contain different numbers of sheets. Suitable loadings include 25 and 100 sheets per pack. The dimensions of the sheets of the packs are not subject to particular limitations. Suitable dimensions of the sheets that correspond with the exposure plane of commonly used cameras are 4×5 inches, and 9×12 cm.

Finally, the container of a sheet pack according to the invention may be formed as a holder complete with a dark slide of a type as illustrated in Figure 1. In such embodiment, the holder, which preferably is disposable, preferably contains at least 100 light-sensitive sheets for reasons of economy.

## Claims

1. A container suitable for holding a stack of photographic sheets, said container comprising four side walls, a rear-wall, spring means for biasing a stack of sheets away from that rear wall, and retaining means which project inwardly over only the margin of the space bounded by said side walls, for retaining the stack against the action of said spring means, so that when a stack of sheets is in position in the container the front sheet, contacting such retaining means, can be exposed to a light image, characterized in that along two opposed side walls of the container there are mutually opposed regions (30—31, 80—81) which are without retaining means so that by exerting buckling forces on a said front sheet in its own plane a portion of that sheet in register with those regions can be caused to bulge from the front of the container preparatory to removal of the sheet therefrom, and that there are provided sheet-buckle locking means (32, 33, 48, 68) which are formed by portions of said sheet retaining means that are arranged in such a way that at two opposite positions that are situated between said opposed regions and a common' side-wall of the container, the distance $b$ between said sheet locking means and the rear-wall of the container is smaller than the distance $c$ between the retaining means and said rear wall at all other positions, by a value $d$ at least equal to the thickness of one sheet.

2. A container according to claim 1, wherein said sheet retaining means is in the form of an inwardly extending peripheral flange (29).

3. A container according to claim 2, wherein said sheet-buckle locking means is formed by ridgelike elevations (32, 33) on the innerside face of said flange (29).

4. A container according to claim 3, wherein the width $g$ of said elevation is smaller than the width $f$ of the flange.

5. A container according to claim 3 or 4, wherein the height $d$ of said elevation is between the thickness of one and two sheets.

6. A container according to any of claims 1 to 5, wherein said opposed regions are located in one half of the length of the corresponding opposed side-walls.

7. A container according to any of claims 1 to 6, which is fitted with a dark slide.

8. A container according to any of claims 1 to 7, in combination with a holder (16, 58) which is provided with a dark slide (18, 66) and which is adapted for attachment to the rear-side of a camera (17, 57), and wherein the said holder has sheet retaining means (53, 54) at locations coinciding with said side wall regions (30—31, 80—81) of said container.

9. A method of forming a plurality of diffusion transfer images, wherein a cassette is a container according to claim 1, characterised in that a plurality of light-sensitive sheets held as a stack in a common cassette are one by one exposed to a light image by means of a camera and dispensed, each one directly after its exposure from the cassette to a processing machine.

10. A method according to claim 9, wherein the cassette is a container according to any of claims 2 to 8.

## Patentansprüche

1. Behälter für einen Stapel photographischen Blätter, enthaltend vier Seitenwände, eine Hinterwand, sowie federnde Mittel zum Vorschieben eines Blattstapels weg von dieser Hinterwand und sich nach innen, über nur den Rand des von den Seitenwänden gebildeten Raums ausragende Haltemittel zum Zurückhalten des Blattstapels der Wirkung dieser federnden Mittel zuwider und zwar in solcher Weise, dass wenn ein Blattstapel im Behälter richtig vorliegt, das erste Blatt, das die Haltemittel berührt, auf einem photographischen Original belichtet wird, dadurch gekennzeichnet dass an zwei einander gegenübergesetzten Seitenwänden des Behälters zwei einander gegenüberliegende Zonen (30—31, 80—81) ohne Haltemittel vorgesehen sind, so dass beim Ausüben von Krümmungskräften auf das erste Blatt in seiner eigenen Ebene, ein Teil dieses mit den gegenüberstehenden Zonen ausgerichteten Blattes zum Krümmen an der Behältervorderseite veranlasst wird bevor dieses Blatt aus dem Blattstapelbehälter entfernt wird und dass Sperrmittel (32, 33, 48, 68) zum Widerstehen der Blattkrümmung vorgesehen sind, wobei diese Sperrmittel durch Elemente der Blatthaltemittel gebildet werden und an zwei einander gegenüberliegenden Lagen, befindlich zwischen diesen einander gegenüberliegenden Zonen und einer gemeinschaftlichen Seitenwand des Behälters, derart angebracht sind, dass die Entfernung $b$ zwischen den Blattsperrmitteln und der Hinterwand des Behälters, an allen andren Lagen, um einen Wert $d$ kleiner als die Entfernung $c$ zwischen den Haltemitteln und dieser Hinterwand ist, wobei der Wert $d$ wenigstens der Dicke eines Blattes gleich ist.

2. Behälter nach Anspruch 1, dadurch gekennzeichnet dass die Blatthaltemittel als ein nach innen ausragender Umfangsflansch (29) gebildet sind.

3. Behälter nach Anspruch 2, dadurch gekennzeichnet dass die Sperrmittel zum Widerstehen der Blattkrümmung durch leistenartig angeformte Erhöhungen (32, 33) auf der Innenseite des Flansches (29) gebildet sind.

4. Behälter nach Anspruch 3, dadurch gekennzeichnet dass die Breite $g$ solcher Erhöhungen kleiner als die Breite $f$ des Flansches ist.

5. Behälter nach Anspruch 3 oder 4, dadurch gekennzeichnet dass die Höhe $d$ dieser Erhöhungen innerhalb der Dicke eines und zweier Blätter liegt.

6. Behälter nach einem der Ansprüche 1 bis 5, dadurch gekennzeichnet dass die einander gegenüberliegenden Zonen in einer Hälfte der Länge der entsprechend gegenüberliegenden Seitenwände befindlich sind.

7. Behälter nach einem der Ansprüche 1 bis 6, dadurch gekennzeichnet dass er mit einem dunklen Schlitten versehen ist.

8. Behälter nach einem der Ansprüche, gekennzeichnet durch eine in Zusammenhang mit ihm arbeitende Halterung (16, 58), die mit einem dunklen Schlitten (18, 66) versehen ist und die zur Befestigung an der Hinterwand einer Kamera (17, 57) angepasst ist, und wobei diese Halterung Blatthaltemittel (53, 54) an den mit besagten Seitenwandzonen (30—31, 80—81) des Behälters zusammenfallendem Stellen aufweist.

9. Verfahren zum Erzeugen von vielfachen Diffusionsübertragungsbildern, wobei eine Kassette als ein Behälters nach Anspruch 1 gestaltet ist, dadurch gekennzeichnet dass eine Menge lichtempfindlichen Blätter als ein Blattstapel in einer üblichen Kassette angebracht ist, ein nach dem anderen auf einem Lichtoriginal mittels einer Kamera belichtet werden und sofort nach der Belichtung auffolgend aus der Kassette durch Auswerfen und Weiterbeförderung einer Verarbeitungsmaschine zugeführt werden.

10. Verfahren nach Anspruch 9, dadurch gekennzeichnet dass die Kassette einen Behälter nach einem der Ansprüche 2 bis 8 ist.

## Revendications

1. Récipient propre à contenir une pile de feuilles photographiques, comprenant quatre parois latérales, une paroi arrière, un ressort pour pousser une pile de feuilles et l'écarter de cette paroi arrière, et un moyen de retenue qui ne se projette vers l'intérieur que sur le bord de l'espace délimité par les parois latérales, pour retenir la pile contre l'action du ressort, de sorte que, lorsqu'une pile de feuilles est en place dans le récipient, la feuille avant, qui est en contact avec le moyen de retenue, peut être exposée à une image lumineuse, ce récipient présentant les caractéristiques suivantes: le long de deux parois latérales opposées du récipient, des régions (30—31, 80—81) opposées l'une à l'autre ne possèdent pas de moyen de retenue, de sorte qu'en exerçant des forces de gondolage sur la feuille avant dans son propre plan, on peut amener une portion de cette feuille qui est en regard de ces régions à se projeter en avant du récipient, avant que la feuille en soit enlevée, et le récipient comprend un dispositif (32, 33, 48, 68) de blocage de la feuille gondolé qui est constitué par des portions du moyen de retenue qui sont disposées de manière qu'en deux emplacements opposés qui sont situés entre lesdites régions et une paroi latérale commune du récipient, la distance *b* entre le dispositif de blocage de la feuille et la paroi arrière du récipient soit inférieure à la distance *c* entre le moyen de retenue et la paroi arrière à tous les autres emplacements, par une différence *d* au moins égale à l'épaisseur d'une feuille.

2. Récipient suivant la revendication 1, dans lequel le moyen de retenue est sous la forme d'un rebord périphérique (29) s'étendant vers l'intérieur.

3. Récipient suivant la revendication 2, dans lequel le dispositif de blocage de la feuille gondolée est constitué par des saillies en crête (32, 33) sur la face intérieure du rebord (29).

4. Récipient suivant la revendication 3, dans lequel la largeur *g* de la saillie est inférieur à la largeur *f* du rebord.

5. Récipient suivant l'une des revendications 3 et 4, dans lequel la hauteur *d* de la saillie est comprise entre l'épaisseur d'une feuille et l'épaisseur de deux feuilles.

6. Récipient suivant l'une quelconque des revendications 1 à 5, dans lequel lesdites régions opposées sont situées dans une moitié de la longueur des parois latérales opposées correspondantes.

7. Récipient suivant l'une quelconque des revendications 1 à 6, dans lequel est monté un volet coulissant obturateur de la lumière.

8. Récipient suivant l'une quelconque des revendications 1 à 7, en combinaison avec un support (16, 58) qui est pourvu d'un volet coulissant (18, 66) obturateur de la lumière, qui est propre à être fixé sur le dos d'une caméra (17, 57) et dans lequel le support possède un dispositif (53, 54) de retenue des feuilles à des emplacements qui coincident avec lesdites régions (30—31, 80—81) des parois latérales du récipient.

9. Procédé pour former plusieurs images par diffusion-transfert, dans lequel une cassette est un récipient suivant la revendication 1, caractérisé par le fait qu'au moyen d'un appareil de prise de vues on expose une par une à une image lumineuse plusieurs feuilles sensibles à la lumière maintenues sous la forme d'une pile dans une cassette commune et qu'on les fait passer, chacune immédiatement après son exposition, de la cassette à une machine de traitement.

10. Procédé suivant la revendication 9, dans lequel la cassette est un récipient suivant l'une quelconque des revendications 1 à 8.

*Fig. 1*

Fig. 2

Fig. 3

Fig. 5

Fig. 4

Fig. 6

Fig. 7A

Fig. 7 B

Fig. 7C

Fig. 7D

Fig. 7 E

Fig. 8

Fig. 9

Fig. 10

Fig. 11 A

Fig. 11 B

Fig. 11 C

Fig. 11 D

Fig. 11 E